(19) Europäisches Patentamt
European Patent Office
Office européen des brevets

(11) **EP 2 033 865 B1**

(12) **EUROPÄISCHE PATENTSCHRIFT**

(45) Veröffentlichungstag und Bekanntmachung des Hinweises auf die Patenterteilung:
**11.01.2012 Patentblatt 2012/02**

(51) Int Cl.:
*B60W 20/00* (2006.01)      *B60W 10/06* (2006.01)
*B60W 10/08* (2006.01)      *B60K 6/48* (2007.10)
*B60W 50/00* (2006.01)

(21) Anmeldenummer: **08104607.0**

(22) Anmeldetag: **02.07.2008**

(54) **Verfahren zur dynamischen Momentenkoordination von Aggregaten eines Hybridantriebs eines Fahrzeugs und entsprechende Vorrichtung**

Dynamic momentum coordination method for generators of hybrid drives of a vehicle and corresponding device

Procédé de coordination de couple dynamique d'agrégats d'un entraînement hybride d'un véhicule et dispositif correspondant

(84) Benannte Vertragsstaaten:
**DE FR GB IT**

(30) Priorität: **06.09.2007 DE 102007042350**

(43) Veröffentlichungstag der Anmeldung:
**11.03.2009 Patentblatt 2009/11**

(73) Patentinhaber: **Robert Bosch GmbH**
**70442 Stuttgart (DE)**

(72) Erfinder:
• **Falkenstein, Jens-Werner**
**73434, Aalen (DE)**
• **Vogelgesang, Markus**
**74379, Ingersheim (DE)**
• **Lang, Martin**
**A-3464, Hausleitel (AT)**

(56) Entgegenhaltungen:
**DE-A1-102006 006 107      DE-A1-102006 007 983**
**DE-A1-102006 016 133      DE-A1-102006 044 427**
**US-A1- 2003 230 441**

## Beschreibung

Die Erfindung betrifft ein Verfahren zur dynamischen Momentenkoordination von Aggregaten eines Hybridantriebs eines Fahrzeugs, insbesondere Kraftfahrzeugs.

## Stand der Technik

Ein derartiges Verfahren zur dynamischen Momentenkoordination ist bekannt: Ist der Hybridantrieb zum Beispiel ein Parallel-Hybridantrieb eines Fahrzeugs, so erfolgt eine Addition der Drehmomente eines ersten Aggregats, beispielsweise eines Verbrennungsmotors, und eines zweiten Aggregats, beispielsweise einer elektrischen Maschine. Diese elektrische Maschine ist zum Beispiel als Startergenerator mit einem Riementrieb oder mit einer Kurbelwelle des Verbrennungsmotors verbunden. Während das Moment der elektrischen Maschine nahezu verzögerungsfrei eingestellt werden kann, weist der Verbrennungsmotor eine endliche Einstellgeschwindigkeit seines Ist-Moments auf. Ein als Ottomotor ausgebildeter Verbrennungsmotor besitzt meist eine elektronische Drosselklappe zur Luftmassenstromregulierung. Die Einstellgeschwindigkeit der Drosselklappe und dynamische Füllungseffekte in einem Saugrohr des Verbrennungsmotors lassen eine hochdynamische Einstellung eines vorgegebenen Luftmassenstroms und des dadurch erzeugten Ist-Moments nicht zu. Ein Vorhalte-Sollmoment wirkt auf den so gebildeten Luftpfad. In einem wirkungsgradoptimalen Betrieb des Verbrennungsmotors, bei idealem Zündwinkel, erzeugt der Verbrennungsmotor ein wirkungsgradoptimales (ideales) Basismoment. Die durch die Luftpfaddynamik bestimmte Übertragung vom Vorhalte-Sollmoment auf das wirkungsgradoptimale Basismoment lässt sich näherungsweise mittels Reihenschaltung eines Todzeitgliedes und eines Verzögerungsgliedes erster Ordnung (PT1-Glied) beschreiben. Eine deutlich höhere Dynamik lässt sich einerseits mittels der elektrischen Maschine und andererseits mittels Zündwinkelveränderung beim Verbrennungsmotor erzielen.

Bei den bekannten Verfahren zur dynamischen Momentenkoordination der Aggregate eines Hybridantriebs im Beispiel wird eine Grundlast von dem Verbrennungsmotor mit wirkungsgradoptimalem Basismoment geleistet, während temporäre Momentanforderungen durch die elektrische Maschine oder teilweise auch durch Zündwinkeleingriffe beim Verbrennungsmotor geleistet werden. Die bekannten Verfahren zur dynamischen Momentenkoordination weisen jedoch kein Gesamtkonzept auf, das ein vorgegebenes Gesamt-Sollmoment mit hoher Dynamik in einem weiten Arbeitsbereich umsetzt und gleichzeitig vorgegebene Randbedingungen, insbesondere bezüglich Kraftstoffverbrauch (Wirkungsgrad), Abgasemissionen und Lebensdauer der Aggregate, berücksichtigt.

Aus der Offenlegungsschrift US 2003/0230441 A1 geht ein Verfahren zum Betreiben eines Hybridantriebs hervor, bei dem der Verbrennungsmotor in zwei unterschiedlichen Betriebsbereichen, nämlich in einem Selbstzündungsbereich und in einem Funkenzündungsbereich betrieben wird, wobei die Betriebsbereiche voneinander beabstandet sind, sodass zwei separate Betriebsbereiche vorliegen.

Ferner ist aus der Offenlegungsschrift DE 10 2006 007 983 A1 ein Verfahren zum Betreiben eines Hybridantriebs bekannt, bei dem im Teillastbetrieb eines Verbrennungsmotors mindestens ein Zylinder abgeschaltet und eine Änderung verbrennungsmotorischer Leistung teilweise durch einen Elektromotor ausgeglichen wird.

## Offenbarung der Erfindung

Zur dynamischen Momentkoordination in einem weiten Arbeitsbereich ist erfindungsgemäß ein Verfahren mit den Merkmalen des Anspruchs 1 vorgesehen, wobei das Verfahren mehrere aufeinanderfolgende Koordinationsstufen aufweist, wobei jeder Koordinationsstufe ein Betriebsbereich für mindestens eines der Aggregate (Antriebsaggregate) zugeordnet ist und jede Koordinationsstufe in Abhängigkeit eines von dem Hybridantrieb angeforderten Gesamt-Sollmoments mindestens eine Anforderung an ein erstes Aggregat und/oder ein zweites Aggregat stellt, wobei eine nachfolgende Koordinationsstufe gegenüber einer vorausgegangenen Koordinationsstufe einen erweiterten, größeren Betriebsbereich aufweist und bei nicht erfüllbarer Anforderung innerhalb des Betriebsbereichs der zugeordneten Koordinationsstufe die nachfolgende Koordinationsstufe angewendet wird. Das Verfahren bestimmt über die Koordinationsstufen die Anforderung an mindestens eines der Aggregate. Dabei wird zunächst von einer eine Start-Koordinationsstufe bildenden Koordinationsstufe, der mindestens eine weitere Koordinationsstufe folgt, ausgegangen. Die Start-Koordinationsstufe weist einen beschränkten Betriebsbereich auf, innerhalb dessen die Anforderung an das Aggregat liegen kann. Das erfindungsgemäße Verfahren zur dynamischen Momentenkoordination von mehreren Aggregaten weist mindestens zwei Koordinationsstufen auf, wobei in jeder nachfolgenden Koordinationsstufe eine den Betriebsbereich bestimmende Begrenzung einer der vorangegangenen Koordinationsstufe aufgegeben wird, wenn die genaue Umsetzung des Gesamt-Sollmoments dies erfordert. Somit lässt sich eine priorisierte Umsetzung der Anforderungen erreichen. Insbesondere ist vorgesehen, dass die einzelnen Koordinationsstufen von einem Betriebszustand eines Antriebsstrangs abhängig parametriert werden. Die Anforderungen sind insbesondere Momentanforderungen an die Aggregate. Alternativ oder zusätzlich sind die Anforderungen Leistungsanforderungen oder Drehzahlanforderungen an die Aggregate.

Das erfindungsgemäße Verfahren dient insbesondere der dynamischen Momentenkoordination von Aggregaten eines Parallel-Hybridantriebs eines Fahrzeugs. Beim Parallel-Hybridantrieb setzt sich das Gesamt-Istmoment aus den durch ein Getriebe gewichteten Momenten der einzelnen Aggregate zusammen. Vorzugsweise ist die Zusammensetzung eine direkte Addition der Istmomente der einzelnen Aggregate. Bei einem Parallel-Hybridantrieb weist vorzugsweise mindestens eine der Koordinationsstufen für jedes der Aggregate eine Anforderung auf.

In einem einfachen Beispiel weist das Verfahren nur einem der Aggregate, zum Beispiel dem ersten Aggregat, Momentgrenzen zu. Kann der Hybridantrieb mittels der Anforderung der zugeordneten Koordinationsstufe an das erste Aggregat das angeforderte Gesamt-Sollmoment nicht aufbringen, wird die der Koordinationsstufe nachfolgende Koordinationsstufe angewendet. Diese nachfolgende Koordinationsstufe weist einen gegenüber dem Betriebsbereich ihrer vorausgegangenen Koordinationsstufe größeren Betriebsbereich auf, sodass sich eine beschränkte Anforderung an ein anderes Aggregat, hier zum Beispiel das zweite Aggregat ergibt. Kann der Hybridantrieb das angeforderte Gesamt-Sollmoment mit der Anforderung innerhalb des Betriebsbereichs der nachfolgenden Koordinationsstufe erfüllen, so wird der Hybridantrieb entsprechend betrieben. Kann das Aggregat auch die Anforderung der nachfolgenden Koordinationsstufe nicht erfüllen, so wird eine weitere nachfolgende Koordinationsstufe angewendet, und so weiter.

Mit Vorteil ist vorgesehen, dass bei Nichterfüllbarkeit einer Anforderung an ein Aggregat im Betriebsbereich der Koordinationsstufe die Anforderung an ein anderes Aggregat ganz oder teilweise weitergegeben wird. Kann zum Beispiel das erste Aggregat in einer Koordinationsstufe die Anforderungen nicht erfüllen, so wird die nachfolgende Koordinationsstufe angewendet. Diese weist gegenüber der vorausgegangenen Koordinationsstufe einen erweiterten Betriebsbereich auf. Um die Summe der Anforderungen an die Aggregate zu erfüllen, muss eines der anderen Aggregate, zum Beispiel das zweite Aggregat, eine höhere Anforderung erfüllen. Somit ergibt sich mindestens ein "Querpfad", der einen mit dem einen Aggregat nicht einstellbaren Momentanteil an ein anderes Aggregat weiterleitet. Wird aufgrund einer Betriebsgrenze eines Betriebsbereichs in einer Koordinationsstufe das Sollmoment des einen Aggregats begrenzt, so wird insbesondere die Differenz aus unbegrenztem und begrenztem Sollmoment dem anderen Aggregat zusätzlich aufgeschaltet. Insbesondere ist vorgesehen, dass die Abgabe der Anforderung von einem Aggregat bei Nichterfüllbarkeit an das andere Aggregat bei einem Wechsel der Koordinationsstufe erfolgt.

Erfindungsgemäß ist vorgesehen, dass als Aggregate mindestens ein Verbrennungsmotor und mindestens eine elektrische Maschine verwendet werden. Insbesondere ist das erste Aggregat der Verbrennungsmotor und das zweite Aggregat die elektrische Maschine.

Erfindungsgemäß ist vorgesehen, dass in einer ersten Koordinationsstufe der Verbrennungsmotor in einem Betriebsbereich mit idealem Basismoment betrieben wird und die elektrische Maschine in einem Betriebsbereich mit einem ersten Elektromaschinen-Sollmoment betrieben wird, dessen Momentgradient begrenzt ist. In der ersten Koordinationsstufe wird der Verbrennungsmotor insbesondere aus Wirkungsgrad- oder Emissionsgründen beim idealen Basismoment betrieben und/oder der Momentgradient des Sollmoments der elektrischen Maschine aus Lebensdauergründen begrenzt.

Weiterhin ist erfindungsgemäß vorgesehen, dass in einer zweiten Koordinationsstufe der Verbrennungsmotor in einem einspritzausblendungsfreien Betriebsbereich mit einem ersten Verbrennungsmotor-Sollmoment betrieben wird und die elektrische Maschine in dem Betriebsbereich mit dem ersten Elektromaschinen-Sollmoment betrieben wird, dessen Momentgradient begrenzt ist. Zur Vermeidung von Schadstoffemissionen werden in der zweiten Koordinationsstufe Einspritzausblendungen einzelner Zylinder oder eine Vollausblendung aller Zylinder ausgeschlossen.

Erfindungsgemäß ist ferner vorgesehen, dass in einer dritten Koordinationsstufe der Verbrennungsmotor in dem einspritzausblendungsfreien Betriebsbereich mit dem ersten Verbrennungsmotor-Sollmoment betrieben wird und die elektrische Maschine in einem Betriebsbereich mit einem zweiten Elektromaschinen-Sollmoment betrieben wird, dessen Moment begrenzt ist. Während die den Betriebsbereich begrenzenden Betriebsgrenzen der dritten Koordinationsstufe für den Verbrennungsmotor gegenüber der zweiten Koordinationsstufe unverändert bleiben können, wird das Elektromaschinen-Sollmoment der elektrischen Maschine auf die Momentengrenzen des zweiten Elektromaschinen-Sollmoments begrenzt.

Außerdem ist gemäß der Erfindung vorgesehen, dass in einer vierten Koordinationsstufe der Verbrennungsmotor in einem Betriebsbereich mit einem Ausblenden von mindestens einem Zylinder des Verbrennungsmotors zulassenden Verbrennungsmotor-Sollmoment betrieben wird und die elektrische Maschine in dem Betriebsbereich mit dem zweiten Elektromaschinen-Sollmoment betrieben wird, dessen Moment begrenzt ist. Während die Betriebsgrenzen des Betriebsbereichs für die elektrische Maschine in der vierten Koordinationsstufe gegenüber der dritten Koordinationsstufe gleich bleiben können, wird in der vierten Koordinationsstufe ein Ausblenden von mindestens einem Zylinder des Verbrennungsmotors zugelassen. Erhöhte Schadstoffemissionen beim Betrieb in der vierten Koordinationsstufe gegenüber einem Betrieb in der ersten, zweiten oder dritten Koordinationsstufe werden dabei zugelassen. Das Ausblenden des mindestens einen Zylinders des Verbrennungsmotors erfolgt insbesondere durch Einspritzausblendung. Insbesondere ist vorgesehen, dass die Reihenfolge der aufeinanderfolgenden Koordinationsstufen mit der ersten Koordinationsstufe beginnt und mit einer der weiteren Koordinationsstufen endet.

In einer bevorzugten Ausführungsform der Erfindung ist vorgesehen, dass die Reihenfolge der aufeinander folgenden Koordinationsstufen mit der ersten Koordinationsstufe beginnt und darauf die zweite Koordinationsstufe, die dritte Koordinationsstufe und schließlich die vierte Koordinationsstufe folgt. Eine derart feine Abstufung ermöglicht einen dynamischen Betrieb des Hybridantriebs bei möglichst hohem Wirkungsgrad und gleichzeitig möglichst geringen Emissionen.

Weiterhin ist mit Vorteil vorgesehen, dass das Gesamt-Sollmoment von einem Fahrer des Fahrzeugs und/oder durch einen Eingriff einer Fahrzeugkomponentensteuerung und/oder eines Fahrsicherheitssystems des Fahrzeugs vorgegeben wird. Der Fahrer gibt das Sollmoment insbesondere durch die Stellung eines Fahrpedals vor. Die Fahrzeugkomponentensteuerung ist zum Beispiel eine Motorsteuerung oder eine Getriebesteuerung. Das Fahrsicherheitssystem ist zum Beispiel ein elektronisches Stabilitäts-Programm ESP.

Nach einer Weiterbildung der Erfindung ist vorgesehen, dass mindestens eine der Koordinationsstufen in Abhängigkeit von einem Betriebszustand gesperrt oder freigegeben wird. Insbesondere ist vorgesehen, dass das Sperren beziehungsweise Freigeben von einem Betriebszustand mindestens eines Aggregats des Hybridantriebs und/oder Komponenten eines Antriebsstrangs abhängt.

In einer bevorzugten Ausführungsform der Erfindung ist vorgesehen, dass je nach Betriebszustand unterschiedliche Parameter für die Momentgradientenbegrenzung des ersten Elektromaschinen-Sollmoments vorgegeben werden.

Schließlich ist mit Vorteil vorgesehen, dass zwischen der Einhaltung des Gesamt-Sollmoments und der Einhaltung einzelner Kriterien priorisiert wird.

Die Erfindung betrifft weiterhin eine Vorrichtung zur Durchführung eines Verfahrens zur dynamischen Momentenkoordination von Aggregaten eines Hybridantriebs eines Fahrzeugs, insbesondere Kraftfahrzeugs, vorzugsweise zur Durchführung des vorstehend genannten Verfahrens, die sich durch die Merkmale des Anspruchs 8 auszeichnet. Es ist vorgesehen, dass das Verfahren mehrere aufeinanderfolgende Koordinationsstufen aufweist und jeder Koordinationsstufe ein Betriebsbereich für mindestens eines der Aggregate zugeordnet ist und jede Koordinationsstufe in Abhängigkeit eines von dem Hybridantrieb angeforderten Gesamt-Sollmoments mindestens eine Anforderung an mindestens ein erstes Aggregat und/oder mindestens ein zweites Aggregat stellt, wobei eine nachfolgende Koordinationsstufe gegenüber einer vorausgegangenen Koordinationsstufe einen erweiterten Betriebsbereich aufweist und bei nicht erfüllbarer Anforderung innerhalb des Betriebsbereichs der zugeordneten Koordinationsstufe die nachfolgende Koordinationsstufe angewendet wird. Die Vorrichtung ist insbesondere eine Steuereinrichtung, vorzugsweise eine in einem die Aggregate koordinierenden Hybridantrieb-Steuergerät implementierte Steuereinrichtung. Das Hybridantrieb-Steuergerät ist Steuergeräten der einzelnen Aggregate übergeordnet und koordiniert die Aggregate über deren Steuergeräte. Erfindungsgemäß ist mindestens ein erstes der Aggregate (Antriebsaggregat) ein Verbrennungsmotor und mindestens ein zweites der Aggregate eine elektrische Maschine. Das Steuergerät des Verbrennungsmotors ist ein Motorsteuergerät; das Steuergerät der elektrischen Maschine ist ein Elektromaschinen-Steuergerät.

Kurze Beschreibung der Zeichnungen

Die Erfindung wird anhand der Figuren näher erläutert, und zwar zeigt:

Figur 1    ein Blockdiagramm eines Simulationsmodells,

Figur 2    ein Simulationsergebnis bei sprungförmiger Rücknahme des Gesamt-Sollmoments und

Figur 3    eine Reaktion der dynamischen Momentenkoordination auf einen Eingriff, der das Gesamt-Sollmoment reduziert.

Ausführungsform(en) der Erfindung

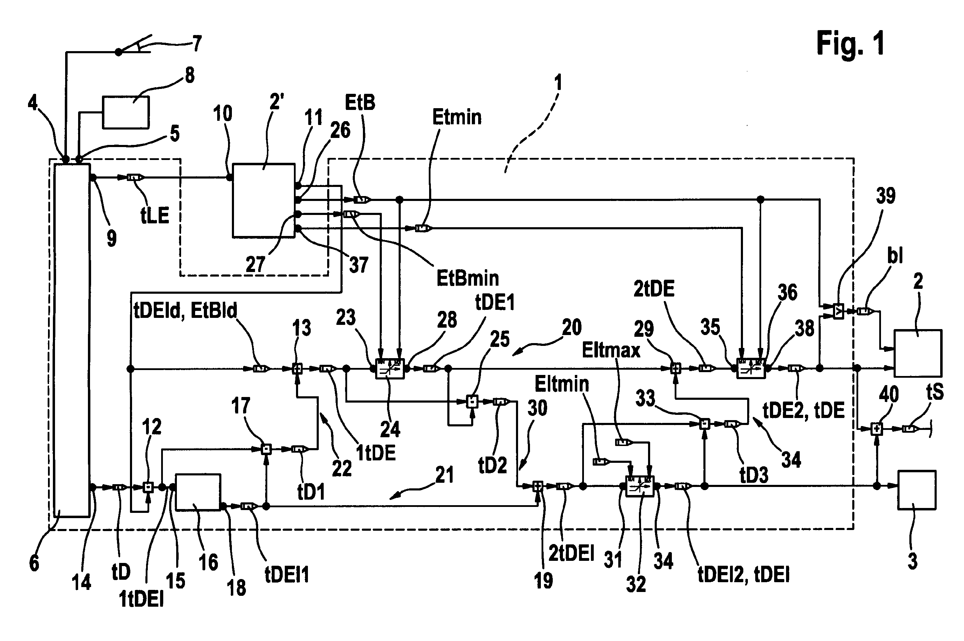

In Figur 1 ist ein Blockdiagramm einer als Steuereinrichtung 1 ausgebildeten Vorrichtung zur dynamischen Momentenkoordination eines Verbrennungsmotors 2 und einer elektrischen Maschine 3 gezeigt. Ein Luftpfad des Verbrennungsmotors 2 ist dabei als Block 2' separat vom Verbrennungsmotor 2 dargestellt. In dieser Anmeldung wird für alle mit Drehmomenten verknüpften Größen statt "Drehmoment" nur das Kürzel "Moment" verwendet, also zum Beispiel Gesamt-Sollmoment anstatt Gesamt-Solldrehmoment oder Momentbegrenzer statt Drehmoment-Begrenzer.

Die Steuereinrichtung 1 weist zwei Eingänge 4, 5 auf, die jeweils mit einem Strategieblock 6 der Steuereinrichtung 1 verbunden sind. Der Eingang 4 ist mit einem Fahrpedal 7 und der Eingang 5 ist mit einem Fahrsicherheits- oder Getriebesystem (Block 8) verbunden. Über die entsprechenden Verbindungsleitungen wird ein Gesamt-Sollmoment tD auf die Eingänge 4, 5 und somit auf den Strategieblock 6 gegeben. Der Strategieblock 6 gibt ein Vorhalte-Sollmoment tLE für den Verbrennungsmotor 2 vor, das im Simulationsmodell über den Ausgang 9 des Strategieblocks 6 an einen Eingang 10 eines Blocks 2' ausgegeben wird. Der Block 2' simuliert den Luftpfad des Verbrennungsmotors 2 (modelliert als Todzeitglied und Verzögerungsglied erster Ordnung) und gibt über einen Ausgang 11 ein ideales Basismoment EtBId beziehungsweise ideales Verbrennungsmotor-Sollmoment tDEId an einen ersten Differenz-Block 12 und einen ersten Addier-Block 13 aus. Das ideale Basismoment EtBId folgt dem Vorhalte-Solldrehmoment tLE aufgrund der Luftpfaddynamik des Luftpfads verzögert. Weiterhin gibt der Strategieblock 6 über einen Ausgang 14 das Gesamt-Sollmoment tD ebenfalls an den ersten Differenz-Block 12 aus. Der Differenz-Block 12 bildet die Differenz aus dem Gesamt-Sollmoment tD und dem idealen Basismoment EtBId. Diese Differenz ist eine erste Elektromaschinen-Momentanforderung 1tDEI. Der erste Differenz-Block 12 gibt diese Elektromaschinen-Momentanforderung 1tDEI an einen Eingang 15 eines Momentgradientenbegrenzer-Blocks 16 und einen zweiten Differenz-Block 17 aus. Der Momentgradientenbegrenzer-Block 16 gibt über einen Ausgang 18 ein momentgradientenbegrenztes erstes Elektromaschinen-Sollmoment tDEI1 ebenfalls an den zweiten Differenz-Block 17 und zusätzlich an einen zweiten Addier-Block 19 aus. Der Momentengradientenbegrenzer-Block 16 kann zusätzlich das erste Elektromaschinen-Sollmoment tDEI1 auf einen vorgegebenen Momentenbereich limitieren. Das ideale Basismoment EtBId ist der Anfang eines Verbrennungsmotor-Sollmoment-Strangs 20, der zum Verbrennungsmotor 2 führt und das erste Elektromaschinen-Sollmoment tDEI1 ist der Anfang eines Elektromaschinen-Sollmoment-Strangs 21, der zur elektrischen Maschine 3 führt. Das ideale Basismoment EtBId und das momentgradientbegrenzte erste Elektromaschinen-Sollmoment tDEI1 charakterisieren eine erste Koordinationsstufe.

Der zweite Differenz-Block 17 bildet die Differenz aus der ersten Elektromaschinen-Momentanforderung 1tDEI und dem erstem Elektromaschinen-Sollmoment tDEI1. Diese Differenz ist ein erstes Differenzmoment tD1. Der zweite Differenz-Block 17 gibt das erste Differenzmoment tD1 über einen ersten Querpfad 22 an den ersten Addier-Block 13 aus, der - wie vorstehend erwähnt -, als weiteres Eingangssignal das ideale Basismoment EtBId vom Block 2' zur Verfügung gestellt bekommt. Der Addier-Block 13 bildet die Summe aus dem idealen Basismoment EtBId und dem ersten Differenzmoment tD1. Diese Summe ist eine erste Verbrennungsmotor-Momentanforderung 1 tDE. Die erste Verbrennungsmotor-Momentanforderung 1tDE wird auf einen Eingang 23 eines ersten Momentbegrenzer-Blocks 24 und einen dritten Differenz-Block 25 gegeben. Der erste Momentbegrenzer-Block 24 begrenzt die Verbrennungsmotor-Momentanforderung 1tDE auf einen Momentbereich zwischen Momentgrenzen eines vom Luftpfad vorgegebenen wirkungsgradoptimalen Basismoments EtB und eines ebenfalls vom Luftpfad vorgegebenen minimalen Basismoments EtBmin, das ohne Ausblendung einzelner oder mehrerer Zylinder des Verbrennungsmotors 2 erreichbar ist. Dieser Momentbereich ist bei einem einspritzausblendungsfreien Betrieb des Verbrennungsmotors 2 durch Zündwinkelverstellung einstellbar. Im Simulationsmodell der Figur 1 gibt der Luftpfad (Block 2') diese Signale über Ausgänge 26, 27 an den ersten Momentbegrenzer-Block 24 aus. Das ideale Basismoment EtBId stimmt in vielen Betriebszuständen mit dem wirkungsgradoptimalen Basismoment EtB überein. Bei einer aktiven Momentenreserve liegt das ideale Basismoment EtBId unterhalb des wirkungsgradoptimalen Basismoments EtB, um zum Beispiel mittels angeforderter Wirkungsgradverschlechterung einen Katalysator zu heizen. Der Momentbegrenzer-Block 24 gibt über einen Ausgang 28 ein momentbegrenztes, erstes Verbrennungsmotor-Sollmoment tDE1 an den dritten Differenz-Block 25 und über den Verbrennungsmotor-Sollmoment-Strang 20 an einen dritten Addier-Block 29 aus. Das einspriztausblendungsfrei momentbegrenzte erste Verbrennungsmotor-Sollmoment tDE1 und das momentgradientbegrenzte erste Elektromaschinen-Sollmoment tDEI1 charakterisieren eine zweite Koordinationsstufe.

Der dritte Differenz-Block 25 bildet die Differenz aus der ersten Verbrennungsmotor-Momentanforderung 1tDE und dem ersten Verbrennungsmotor-Sollmoment tDE1. Diese Differenz ist ein zweites Differenzmoment tD2. Der dritte Differenz-Block 25 gibt das zweite Differenzmoment tD2 über einen zweiten Querpfad 30 an den zweiten Addier-Block 19 aus, der - wie vorstehend erwähnt -, als weiteres Eingangssignal das erste Elektromaschinen-Sollmoment tDEI1 vom Momentgradientenbegrenzer-Block 16 zur Verfügung gestellt bekommt. Der zweite Addier-Block 19 bildet die Summe aus dem zweiten Differenzmoment tD2 und dem ersten Elektromaschinen-Sollmoment tDEI1. Diese Summe ist eine zweite Elektromaschinen-Momentanforderung 2tDEI. Der zweite Addier-Block 19 gibt diese zweite Elektromaschinen-Momentanforderung 2tDEI an einen Eingang 31 eines zweiten Momentbegrenzer-Blocks 32 und einen vierten Differenz-Block 33 aus. Der zweite Momentbegrenzer-Block 32 gibt über einen Ausgang 34 ein Elektromaschinen-Sollmoment tDEI ebenfalls an den vierten Differenz-Block 33 und zusätzlich im Elektromaschinen-Sollmoment-Strang 21 an die elektrische Maschine 3 beziehungsweise ein nicht dargestelltes Steuergerät der elektrischen Maschine 3 (Elektromaschinen-Steuergerät) aus. Das Elektromaschinen-Sollmoment tDEI wird zur besseren Unterscheidung vom ersten Elektromaschinen-Sollmoment tDEI1 auch als zweites Elektromaschinen-Sollmoment tDEI2 bezeichnet. Der zweite Momentbegrenzer-Block 32 begrenzt die Elektromaschinen-Momentanforderung 2tDEI auf einen Momentbereich zwischen einer oberen Momentgrenze Eltmax und einer unteren Momentgrenze Eltmin. Das momentbegrenzte erste Verbrennungsmotor-Sollmoment tDE1 und das momentbegrenzte Elektromaschinen-Sollmoment tDEI charakterisieren eine dritte Koordinationsstufe.

Der vierte Differenz-Block 33 bildet die Differenz aus der zweiten Elektromaschinen-Momentanforderung 2tDEI und dem zweiten Elektromaschinen-Sollmoment tDEI2. Diese Differenz ist ein drittes Differenzmoment tD3. Der vierte Differenz-Block 33 gibt das dritte Differenzmoment tD3 über einen dritten Querpfad 34 an den dritten Addier-Block 29 aus, der - wie vorstehend erwähnt -, als weiteres Eingangssignal das erste Verbrennungsmotor-Sollmoment tDE1 vom ersten Momentbegrenzer-Block 24 zur Verfügung gestellt bekommt. Der dritte Addier-Block 29 bildet die Summe aus dem ersten Verbrennungsmotor-Sollmoment tDE1 und dem dritten Differenzmoment tD3. Diese Summe ist eine zweite Verbrennungsmotor-Momentanforderung 2tDE. Die zweite Verbrennungsmotor-Momentanforderung 2tDE wird auf einen Eingang 35 eines dritten Momentbegrenzer-Blocks 36 gegeben. Der dritte Momentbegrenzer-Block 36 begrenzt die Verbrennungsmotor-Momentanforderung 2tDE auf einen Momentbereich zwischen Momentgrenzen des vom Luftpfad vorgegebenen Basismoments EtB und eines minimalen Verbrennungsmotor-Moments Etmin, das mittels Zündverstellung und Ausblendung einzelner oder mehrerer Zylinder des Verbrennungsmotors 2 erreichbar ist. Dabei gilt:

$$Etmin < EtBmin < EtBId \leq EtB.$$

Im Simulationsmodell der Figur 1 gibt der Luftpfad (Block 2') diese Signale über Ausgänge 26, 37 an den dritten Momentbegrenzer-Block 36 aus. Der dritte Momentbegrenzer-Block 36 gibt über einen Ausgang 38 ein momentbegrenztes Verbrennungsmotor-Sollmoment tDE über den Verbrennungsmotor-Sollmoment-Strang 20 an den Verbrennungsmotor 2 beziehungsweise ein nicht dargestelltes Steuergerät des Verbrennungsmotors 2 (Motorsteuergerät) und an einen Vergleichsblock 39 aus. Das Verbrennungsmotor-Sollmoment tDE wird zur besseren Unterscheidung vom ersten Verbrennungsmotor-Sollmoment tDE1 auch als zweites Verbrennungsmotor-Sollmoment tDE2 bezeichnet. Der Vergleichsblock 39 vergleicht das Verbrennungsmotor-Sollmoment tDE mit dem Basismoment EtB und gibt eine Freigabemarke des Zündwinkels bI an das Steuergerät des Verbrennungsmotors 2 aus. Ein vierter Addier-Block 40 bildet die Summe aus dem zweiten Verbrennungsmotor-Sollmoment tDE2 und dem Elektromaschinen-Sollmoment TDEI. Diese Summe ist ein Gesamt-Sollmoment tS des Hybridantriebs. Das momentbegrenzte Verbrennungsmotor-Sollmoment tDE und das momentbegrenzte Elektromaschinen-Sollmoment tDEI charakterisieren eine vierte Koordinationsstufe.

Es ergeben sich somit vier Koordinationsstufen mit folgenden Betriebsbereichen:

- "Betreiben des Verbrennungsmotors aus Wirkungsgradgründen beim idealen Basismoment und Momentgradientenbegrenzung der Elektromaschinen-Momentanforderung aus Lebensdauergründen" bei der ersten Koordinationsstufe,

- "Vermeidung von Einspritzausblendungen einzelner Zylinder bzw. Vollausblendung (zum Beispiel aus Emissionsgründen), Momentgradientenbegrenzung der Elektromaschinen-Momentanforderung aus Lebensdauergründen" bei der zweiten Koordinationsstufe,

- "Vermeidung von Einspritzausblendungen einzelner Zylinder bzw. Vollausblendung (z.B. aus Emissionsgründen), Begrenzung des Elektromaschinen-Momentanforderung auf die Momentengrenzen Eltmax und Eltmin" bei der dritten Koordinationsstufe,

- "Freigabe von Einspritzausblendungen einzelner Zylinder bzw. Vollausblendung, Begrenzung des Elektromaschinen-Momentanforderung auf die Momentengrenzen Eltmax und Eltmin" bei der vierten Koordinationsstufe.

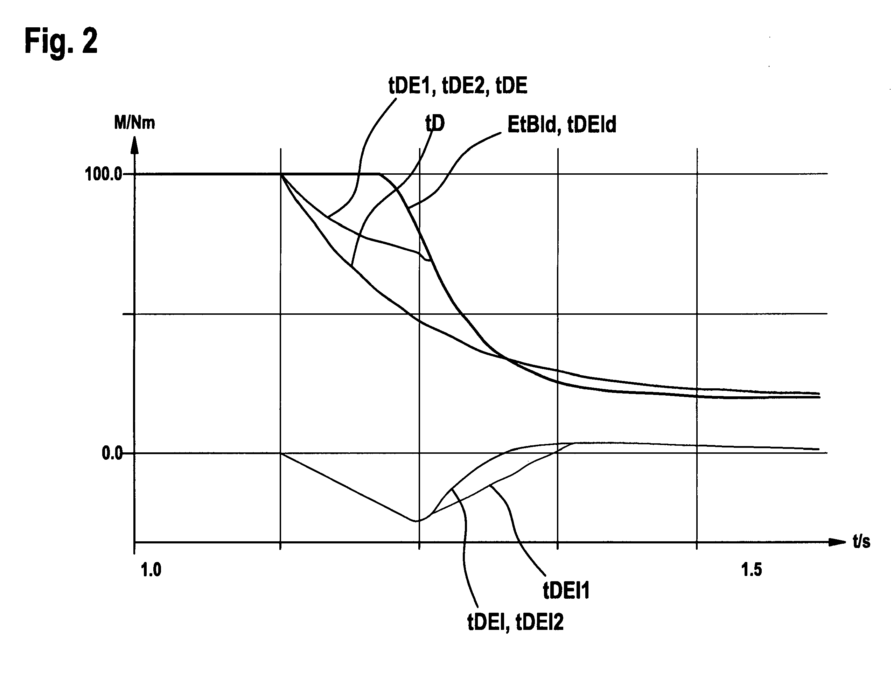

Die Figur 2 zeigt ein Diagramm, bei dem Momente (Drehmomente) M über der Zeit t aufgetragen sind. Die aufgetragenen Momente sind das Gesamt-Sollmoment tD, das ideale Basismoment EtBId, das gradientenbegrenzte erste Elektromaschinen-Sollmoment tDEI1, das Elektromaschinen-Sollmoment tDEI (beziehungsweise tDEI2) und das Verbrennungsmotor-Sollmoment tDE (beziehungsweise tDE2). Die in Figur 2 gezeigten Simulationsergebnisse entsprechen einer sprungförmigen Rücknahme des Fahrpedals 7 durch den Fahrer des Fahrzeugs. Das ideale Basismoment EtBId und damit das ideale Sollmoment tDEId folgen dem Vorhalte-Sollmoment tLE entsprechend der Luftpfaddynamik verzögert. Aus Komfortgründen wird im Strategieblock 6 ein tiefpassgefilterter Übergang im Gesamt-Sollmoment tD von 100 Nm auf 20 Nm vorgegeben. Die erste Koordinationsstufe versucht, den Verbrennungsmotor 2 mit dem idealen Verbrennungsmotor-Sollmoment tDEId (gleich dem idealen Basismoment EtBId) zu betreiben und dessen verzögerte Reaktion mit Hilfe eines fallenden ersten Elektromaschinen-Sollmoments tDEI1 der elektrischen Maschine 3 auszugleichen. Allerdings ist dies aufgrund der Gradientenbegrenzung des ersten Elektromaschinen-Sollmoments tDEI1 nicht vollständig möglich. In der zweiten Koordinationsstufe erfolgt daher eine temporäre Abweichung des ersten Verbrennungsmotor-Sollmoments tDE1 vom idealen Basismoment EtBId, verbunden mit einer Freigabe des Zündwinkels bI = 1.

Ab dem Zeitpunkt t = 1.2 Sekunden fällt das ideale Basismoment EtBId verstärkt ab, das gradientenbegrenzte Elektromaschinen-Solllmoment tDEI1 steigt entsprechend an. Da eine Erhöhung des Verbrennungsmotor-Sollmoments tDE über das wirkungsgradoptimale Basismoment EtB (das im Ausführungsbeispiel dem idealen Basismoment EtBId entspricht, da keine Momentenreserven vorhanden sind) nicht möglich ist, muss die Anforderung nach Gradientenbegrenzung der elektrischen Maschine 3 verletzt werden, um den Verlauf des Gesamt-Sollmoments tD einzuhalten. Das Elektromaschinen-Sollmoment tDEI weicht temporär nach oben vom gradientenbegrenzten Sollmoment tDEI1 ab (dritte Kordinationsstufe). Das Gesamtmoment tS der beiden Solldrehmomente TDEI, tDE der Aggregate 2, 3 entspricht dem Summen-Solldrehmoment tD.

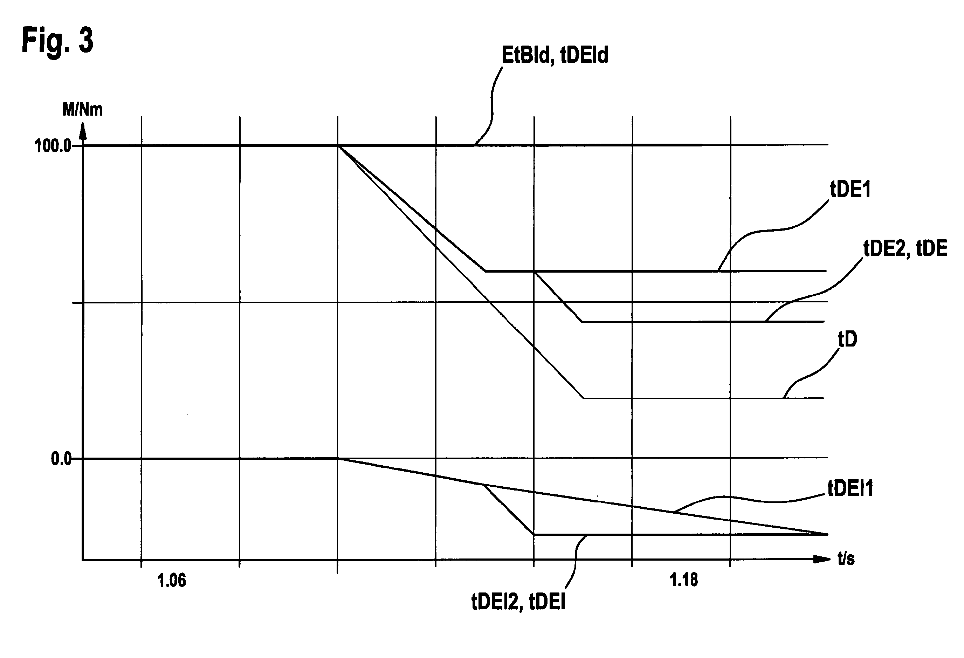

Die Figur 3 zeigt ein Diagramm, bei dem Momente M über der Zeit t aufgetragen sind. Die aufgetragenen Momente sind das Gesamt-Sollmoment tD, das ideale Basismoment EtBId, das gradientenbegrenzte erste Elektromaschinen-Sollmoment tDEI1, das Elektromaschinen-Sollmoment tDEI und das Verbrennungsmotor-Sollmoment tDE. Das Diagramm der Figur 3 zeigt eine Reaktion der dynamischen Momentenkoordination auf einen schnellen das Moment reduzierenden externen Eingriff, zum Beispiel eines Fahrsicherheitssystems (Block 8), insbesondere eines ESP-Eingriffs, verbunden mit einem rampenförmigen Verlauf des Summen-Solldrehmoments tD. Im Einfachen wird davon ausgegangen, dass keine Auswirkungen auf das ideale Basismoment EtBId und damit das ideale Verbrennungsmotor-Sollmoment tDEId bestehen, da die Zeitdauer des Eingriffs entsprechend kurz ist. Die Figur 3 zeigt das sequentielle Ansprechen der verschiedenen Koordinationsstufen. Dabei gilt für das minimale Basismoment:

$$EtBmin = 60 \ Nm$$

und die untere Momentengrenze der elektrischen Maschine 3:

$$EltDmin = -24 \ Nm.$$

Das Gesamt-Sollmoment tD fällt stärker ab als das gradientenbegrenzte erste Elektromaschinen-Sollmoment tDEI1, daher erfolgt ab Beginn des externen Eingriffes ein Zündwinkeleingriff, verbunden mit einer Abweichung des ersten Verbrennungsmotor-Sollmoments tDE1 von dem idealen Basismoment EtBId, das dem idealen Verbrennungsmotor-Sollmoment tDEId entspricht. Bei vollständigem Eingriff weicht das Verbrennungsmotor-Sollmoment tDE nach unten von dem ersten Verbrennungsmotor-Sollmoment tDE1 ab, verbunden mit einer zylinderindividuellen Einspritzausblendung.

Das erfindungsgemäße Verfahren erlaubt eine genaue Umsetzung des Gesamt-Sollmoments tD auch bei stark variierender Dynamik des Luftpfades (Block 2') des Verbrennungsmotors 2, die vom Betriebspunkt des Verbrennungsmotors (gegeben durch Drehmoment, Drehzahl, et cetera) abhängt. Mit dem Einsatz der elektrischen Maschine 3 können Zündwinkeleingriffe minimiert werden, die neben Wirkungsgradverlusten bei hoher Last zu Temperaturspitzen im Katalysator führen und dessen Lebensdauer beeinträchtigen können. Daneben kann die Einspritzausblendung einzelner Zylinder minimiert werden, die erhöhte Abgasemissionen zur Folge hat. Ebenso fließen Lebensdauerbetrachtungen der elektrischen Maschine 3, eines Energiespeichers, et cetera ein. Die Priorität der einzelnen Begrenzungen kann durch die mehrstufige Koordination vorgegeben werden.

Im Ausführungsbeispiel ist ein Einsatz des erfindungsgemäßen Verfahrens für einen als Ottomotor ausgebildeten Verbrennungsmotor 2 und eine als Kurbelwellenstartergenerator ausgebildete elektrischen Maschine 3 beschrieben. Anforderungen, deren Priorisierung und daraus resultierenden Maßnahmen sind exemplarisch. Es können auch modifizierte oder völlig andere Entscheidungsgrundlagen, die zum Beispiel auf anderen Aggregattypen beruhen, zugrunde gelegt werden. Die Kriterien können zum Beispiel allgemeinere Kriterien zur wirkungsgradoptimalen Umsetzung der Momente anstatt der Vermeidung von Zündwinkeleingriffen beim Ottomotor sein.

In einer vorteilhaften Ausgestaltung der Erfindung lassen sich einzelne Koordinationsstufen je nach Betriebszustand freigeben oder sperren.

In einer weiteren Ausgestaltung der Erfindung kann zusätzlich zwischen der Einhaltung des Gesamt-Sollmoments und der Einhaltung einzelner Kriterien priorisiert werden. Dies geschieht zum Beispiel dadurch dass eine Abweichung des Gesamt-Istmoments tS der beiden Aggregate 2, 3 vom Gesamt-Sollmoment tD zugunsten der Einhaltung des Elektromaschinen-Sollmoments akzeptiert wird.

Daneben ist es von Vorteil, je nach Betriebszustand unterschiedliche Parameter für die Momentgradientenbegrenzung des ersten Elektromaschinen-Sollmoments tDEI1 vorzugeben. Auch unterschiedliche Momentengrenzen für die elektrische Maschine, die ein Nutzen des vollständigen Momentenbereichs nur bei sicherheitskritischen externen Eingriffen erlaubt, ansonsten jedoch nur einen Betrieb bei reduzierten Momentengrenzen zulässt, können aus Lebensdauergründen sinnvoll sein.

**Patentansprüche**

1. Verfahren zur dynamischen Momentenkoordination von Aggregaten eines Hybridantriebs eines Fahrzeugs, insbesondere Kraftfahrzeugs, mit mehreren aufeinanderfolgenden Koordinationsstufen, wobei jeder Koordinationsstufe ein Betriebsbereich für mindestens eines der Aggregate zugeordnet ist und jede Koordinationsstufe in Abhängigkeit eines von dem Hybridantrieb angeforderten Gesamt-Sollmoments (tD) mindestens eine Anforderung an ein erstes Aggregat und/oder ein zweites Aggregat stellt, wobei eine nachfolgende Koordinationsstufe gegenüber einer vorausgegangenen Koordinationsstufe einen erweiterten Betriebsbereich aufweist und bei nicht erfüllbarer Anforderung innerhalb des Betriebsbereichs der zugeordneten Koordinationsstufe die nachfolgende Koordinationsstufe angewendet wird, wobei als Aggregate mindestens ein Verbrennungsmotor (2) und mindestens eine elektrische Maschine (3) verwendet werden und

   - in einer ersten Koordinationsstufe der Verbrennungsmotor (2) in einem Betriebsbereich mit idealem Basismoment (EtBld) betrieben wird und die elektrische Maschine (3) in einem Betriebsbereich mit einem ersten Elektromaschinen-Sollmoment (tDEI1), dessen Momentgradient begrenzt ist,

- in einer zweiten Koordinationsstufe der Verbrennungsmotor (2) in einem einspritzausblendungsfreien Betriebsbereich mit einem ersten Verbrennungsmotor-Sollmoment (tDE1) betrieben wird und die elektrische Maschine (3) in dem Betriebsbereich mit dem ersten Elektromaschinen-Sollmoment (tDEI1), dessen Momentgradient begrenzt ist,

- in einer dritten Koordinationsstufe der Verbrennungsmotor (2) in dem einspritzausblendungsfreien Betriebsbereich mit dem ersten Verbrennungsmotor-Sollmoment (tDE1) betrieben wird und die elektrische Maschine (3) in einem Betriebsbereich mit einem zweiten Elektromaschinen-Sollmoment (tDEI2), dessen Moment begrenzt ist, und

- in einer vierten Koordinationsstufe der Verbrennungsmotor in einem Betriebsbereich mit einem ein Ausblenden von mindestens einem Zylinder des Verbrennungsmotors (2) zulassenden zweiten Verbrennungsmotor-Sollmoment (tDE2) betrieben wird und die elektrische Maschine (3) in dem Betriebsbereich mit dem zweiten Elektromaschinen-Sollmoment (tDEI2), dessen Moment begrenzt ist.

2. Verfahren nach Anspruch 1, **dadurch gekennzeichnet, dass** bei Nichterfüllbarkeit einer Anforderung an ein Aggregat im Betriebsbereich der Koordinationsstufe die Anforderung an ein anderes Aggregat ganz oder teilweise weitergegeben wird.

3. Verfahren nach einem der vorhergehenden Ansprüche, **dadurch gekennzeichnet, dass** die Reihenfolge der aufeinanderfolgenden Koordinationsstufen mit der ersten Koordinationsstufe beginnt und mit einer der weiteren Koordinationsstufen endet.

4. Verfahren nach einem der vorhergehenden Ansprüchen, **dadurch gekennzeichnet, dass** die Reihenfolge der aufeinanderfolgenden Koordinationsstufen mit der ersten Koordinationsstufe beginnt und darauf die zweite Koordinationsstufe, die dritte Koordinationsstufe und schließlich die vierte Koordinationsstufe folgt.

5. Verfahren nach einem der vorhergehenden Ansprüchen, **dadurch gekennzeichnet, dass** das Gesamt-Sollmoment (tD) über ein Fahrpedal (7) von einem Fahrer des Fahrzeugs und/oder durch einen Eingriff einer Fahrzeugkomponentensteuerung und/oder eines Fahrsicherheitssystems (8) des Fahrzeugs vorgegeben wird.

6. Verfahren nach einem der vorhergehenden Ansprüchen, **dadurch gekennzeichnet, dass** mindestens eine der Koordinationsstufen in Abhängigkeit von einem Betriebszustand des Hybridantriebs gesperrt oder freigegeben wird.

7. Verfahren nach einem der vorhergehenden Ansprüchen, **dadurch gekennzeichnet, dass** je nach Betriebszustand unterschiedliche Parameter für die Momentgradientenbegrenzung des ersten Elektromaschinen-Sollmoments (tDEI1) vorgegeben werden.

8. Verfahren nach einem der vorhergehenden Ansprüchen, **dadurch gekennzeichnet, dass** zwischen der Einhaltung des Gesamt-Sollmoments (tD) und der Einhaltung einzelner Kriterien priorisiert wird.

9. Vorrichtung zur Durchführung eines Verfahrens zur dynamischen Momentenkoordination von Aggregaten eines Hybridantriebs eines Fahrzeugs, insbesondere Kraftfahrzeugs, vorzugsweise zur Durchführung eines Verfahrens nach mindestens einem der vorhergehenden Ansprüche, wobei das Verfahren mehrere aufeinanderfolgende Koordinationsstufen aufweist und jeder Koordinationsstufe ein Betriebsbereich für mindestens eines der Aggregate zugeordnet ist und jede Koordinationsstufe in Abhängigkeit eines von dem Hybridantrieb angeforderten Gesamt-Sollmoments (tD) mindestens eine Anforderung an mindestens ein erstes Aggregat und/oder mindestens ein zweites Aggregat stellt, wobei eine nachfolgende Koordinationsstufe gegenüber einer vorausgegangenen Koordinationsstufe einen erweiterten Betriebsbereich aufweist und bei nicht erfüllbarer Anforderung innerhalb des Betriebsbereichs der zugeordneten Koordinationsstufe die nachfolgende Koordinationsstufe angewendet wird, wobei als Aggregate mindestens ein Verbrennungsmotor (2) und mindestens eine elektrische Maschine (3) vorgesehen sind, und wobei die Vorrichtung die Koordinationsstufen derart bestimmt, dass

- in einer ersten Koordinationsstufe der Verbrennungsmotor (2) in einem Betriebsbereich mit idealem Basismoment (EtBld) betrieben wird und die elektrische Maschine (3) in einem Betriebsbereich mit einem ersten Elektromaschinen-Sollmoment (tDEI1), dessen Momentgradient begrenzt ist,

- in einer zweiten Koordinationsstufe der Verbrennungsmotor (2) in einem einspritzausblendungsfreien Betriebsbereich mit einem ersten Verbrennungsmotor-Sollmoment (tDE1) betrieben wird und die elektrische Maschine (3) in dem Betriebsbereich mit dem ersten Elektromaschinen-Sollmoment (tDEI1), dessen Momentgradient begrenzt ist,

- in einer dritten Koordinationsstufe der Verbrennungsmotor (2) in dem einspritzausblendungsfreien Betriebsbereich mit dem ersten Verbrennungsmotor-Sollmoment (tDE1) betrieben wird und die elektrische Maschine (3) in einem Betriebsbereich mit einem zweiten Elektromaschinen-Sollmoment (tDEI2), dessen Moment begrenzt ist, und
- in einer vierten Koordinationsstufe der Verbrennungsmotor in einem Betriebsbereich mit einem ein Ausblenden von mindestens einem Zylinder des Verbrennungsmotors (2) zulassenden zweiten Verbrennungsmotor-Sollmoment (tDE2) betrieben wird und die elektrische Maschine (3) in dem Betriebsbereich mit dem zweiten Elektromaschinen-Sollmoment (tDEI2), dessen Moment begrenzt ist.

10. Hybrilatieb-stenergemaB, in das eine Vorrichtung nach Anspruch 9, implantiest ist.

**Claims**

1. Method for the dynamic torque coordination of assemblies of a hybrid drive of a vehicle, in particular a motor vehicle, having a plurality of successive coordination stages, with each coordination stage having an associated operating range for at least one of the assemblies and each coordination stage making at least one request of a first assembly and/or a second assembly depending on a total setpoint torque (tD) which is requested by the hybrid drive, with a subsequent coordination stage having an extended operating range in relation to a preceding coordination stage and, if the request cannot be fulfilled within the operating range of the associated coordination stage, the subsequent coordination stage being employed, with at least one internal combustion engine (2) and at least one electrical machine (3) being used as assemblies, and

- in a first coordination stage, the internal combustion engine (2) being operated in an operating range with an ideal base torque (EtBld), and the electrical machine (3) being operated in an operating range with a first electrical machine setpoint torque (tOEI1), the torque gradient of this electrical machine setpoint torque being limited,
- in a second coordination stage, the internal combustion engine (2) being operated in an operating range in which injection is not shut off and with a first internal combustion engine setpoint torque (tDE1), and the electrical machine (3) being operated in the operating range with the first electrical machine setpoint torque (tDEI1), the torque gradient of this electrical machine setpoint torque being limited,
- in a third coordination stage, the internal combustion engine (2) being operated in an operating range in which injection is not shut off and with the first internal combustion engine setpoint torque (tDE1), and the electrical machine (3) being operated in an operating range with a second electrical machine setpoint torque (tDEI2), the torque gradient of this electrical machine setpoint torque being limited, and
- in a fourth coordination stage, the internal combustion engine being operated in an operating range with a second internal combustion engine setpoint torque (tDE2) which permits at least one cylinder of the internal combustion engine (2) to be shut off, and the electrical machine (3) being operated in an operating range with the second electrical machine setpoint torque (tDEI2), the torque gradient of this electrical machine setpoint torque being limited.

2. Method according to Claim 1, **characterized in that**, when a request which is made of an assembly is not fulfilled in the operating range of the coordination stage, the entire request or part of the request is passed to another assembly.

3. Method according to either of the preceding claims, **characterized in that** the sequence of the successive coordination stages begins with the first coordination stage and ends with one of the further coordination stages.

4. Method according to one of the preceding claims, **characterized in that** the sequence of the successive coordination stages begins with the first coordination stage and this is followed by the second coordination stage, the third coordination stage and finally the fourth coordination stage.

5. Method according to one of the preceding claims, **characterized in that** the total setpoint torque (tD) is predefined by a driver of the vehicle by means of an accelerator pedal (7) and/or by intervention by a vehicle component control system and/or a driving safety system (8) of the vehicle.

6. Method according to one of the preceding claims, **characterized in that** at least one of the coordination stages is blocked or enabled depending on an operating state of the hybrid drive.

7. Method according to one of the preceding claims, **characterized in that** different parameters for limiting the torque gradient of the first electrical machine setpoint torque (tDEI1) are predefined depending on the operating state.

8. Method according to one of the preceding claims, **characterized in that** a priority is established between compliance with the total setpoint torque (tD) and compliance with individual criteria.

9. Apparatus for carrying out a method for the dynamic torque coordination of assemblies of a hybrid drive of a vehicle, in particular a motor vehicle, preferably for carrying out a method according to at least one of the preceding claims, with the method having a plurality of successive coordination stages and each coordination stage having an associated operating range for at least one of the assemblies and each coordination stage making at least one request of at least a first assembly and/or at least a second assembly depending on a total setpoint torque (tD) which is requested by the hybrid drive, with a subsequent coordination stage having an extended operating range in relation to a preceding coordination stage and, if the request cannot be fulfilled within the operating range of the associated coordination stage, the subsequent coordination stage being employed, with at least one internal combustion engine (2) and at least one electrical machine (3) being provided as assemblies, and with the apparatus determining the coordination stages in such a way that

- in a first coordination stage, the internal combustion engine (2) is operated in an operating range with an ideal base torque (EtBld), and the electrical machine (3) is operated in an operating range with a first electrical machine setpoint torque (tDEI1), the torque gradient of this electrical machine setpoint torque being limited,
- in a second coordination stage, the internal combustion engine (2) is operated in an operating range in which injection is not shut off and with a first internal combustion engine setpoint torque (tDE1), and the electrical machine (3) is operated in the operating range with the first electrical machine setpoint torque (tDEI1), the torque gradient of this electrical machine setpoint torque being limited,
- in a third coordination stage, the internal combustion engine (2) is operated in the operating range in which injection is not shut off and with the first internal combustion engine setpoint torque (tDE1), and the electrical machine (3) is operated in an operating range with a second electrical machine setpoint torque (tDEI2), the torque gradient of this electrical machine setpoint torque being limited, and
- in a fourth coordination stage, the internal combustion engine is operated in an operating range with a second internal combustion engine setpoint torque (tDE2) which permits at least one cylinder of the internal combustion engine (2) to be shut off, and the electrical machine (3) is operated in the operating range with the second electrical machine setpoint torque (tDEI2), the torque gradient of this electrical machine setpoint torque being limited.

10. Hybrid drive controller, in which an apparatus according to Claim 9 is implemented.

**Revendications**

1. Procédé de coordination de couple dynamique des agrégats d'un entraînement hybride d'un véhicule, notamment d'un véhicule automobile, avec plusieurs étapes de coordination successives, une plage de fonctionnement étant associée à chaque étape de coordination pour au moins un des agrégats et chaque étape de coordination effectuant au moins une demande auprès d'un premier agrégat et/ou d'un deuxième agrégat en fonction d'un couple théorique total (tD) demandé par l'entraînement hybride, une étape de coordination suivante comportant une plage de fonctionnement élargie par rapport à une étape de coordination précédente et l'étape de coordination suivante étant appliquée lorsque la demande n'a pas pu être satisfaite dans le cadre de la plage de fonctionnement de l'étape de coordination associée, les agrégats utilisés comprenant au moins un moteur à combustion interne (2) et au moins un moteur électrique (3) ; et

- lors d'une première étape de coordination, le moteur à combustion interne (2) est entraîné, dans une plage de fonctionnement, à un couple de base idéal (EtBld) et le moteur électrique (3) est entraîné, dans une plage de fonctionnement, à un premier couple théorique de moteur électrique (tDEI1) dont le gradient de couple est limité ;
- lors d'une deuxième étape de coordination, le moteur à combustion interne (2) est entraîné, dans une plage de fonctionnement sans fermeture en fondu de l'injection, à un premier couple théorique de moteur à combustion interne (tDE1) et le moteur électrique (3) est entraîné, dans la plage de fonctionnement, au premier couple théorique de moteur électrique (tDEI1) dont le gradient de couple est limité ;
- lors d'une troisième étape de coordination, le moteur à combustion interne (2) est entraîné, dans la plage de fonctionnement sans fermeture en fondu de l'injection, au premier couple théorique de moteur à combustion interne (tDE1) et le moteur électrique (3) est entraîné, dans une plage de fonctionnement, à un deuxième couple théorique de moteur électrique (tDEI2) dont le gradient de couple est limité ; et
- lors d'une quatrième étape de coordination, le moteur à combustion interne est entraîné, dans une plage de fonctionnement, à un deuxième couple théorique de moteur à combustion interne (tDE2) permettant une fermeture en fondu d'au moins un cylindre du moteur à combustion interne (2) et le moteur électrique (3) est entraîné, dans la plage de fonctionnement, au deuxième couple théorique de moteur électrique (tDEI2) dont le gradient de couple est limité.

2. Procédé selon la revendication 1, **caractérisé en ce qu'**en cas d'incapacité à satisfaire une demande adressée à un agrégat dans la plage de fonctionnement de l'étape de coordination, la demande est transmise pour tout ou partie à un autre agrégat.

3. Procédé selon l'une quelconque des revendications précédentes, **caractérisé en ce que** la succession des étapes de coordination successives commence par la première étape de coordination et se finit par une des étapes de coordination suivantes.

4. Procédé selon l'une quelconque des revendications précédentes, **caractérisé en ce que** la succession des étapes de coordination successives commence par la première étape de coordination, suivie de la deuxième étape de coordination, de la troisième étape de coordination puis pour finir de la quatrième étape de coordination.

5. Procédé selon l'une quelconque des revendications précédentes, **caractérisé en ce que** le couple théorique total (tD) est fourni au préalable par un conducteur du véhicule par le biais de la pédale d'accélération (7) et/ou par une intervention d'un élément de commande d'un composant du véhicule et/ou d'un système de sécurité de conduite (8) du véhicule.

6. Procédé selon l'une quelconque des revendications précédentes, **caractérisé en ce qu'**au moins une des étapes de coordination est bloquée ou déclenchée en fonction de l'état de fonctionnement de l'entraînement hybride.

7. Procédé selon l'une quelconque des revendications précédentes, **caractérisé en ce qu'**en fonction de l'état de fonctionnement, différents paramètres sont prédéfinis pour limiter le gradient de couple du premier couple théorique de moteur électrique (tDEI1).

8. Procédé selon l'une quelconque des revendications précédentes, **caractérisé en ce qu'**une priorité est établie entre le maintien du couple théorique total (tD) et le maintien des critères individuels.

9. Dispositif de mise en oeuvre d'un procédé de coordination de couple dynamique des agrégats d'un entraînement hybride d'un véhicule, notamment d'un véhicule automobile, de préférence de mise en oeuvre d'un procédé selon au moins l'une quelconque des revendications précédentes, le procédé comportant plusieurs étapes de coordination successives et une plage de fonctionnement étant associée à chaque étape de coordination pour au moins un des agrégats et chaque étape de coordination effectuant, en fonction d'un couple théorique total (tD) demandé par l'entraînement hybride, au moins une demande auprès d'au moins un premier agrégat et/ou d'au moins un deuxième agrégat, une étape de coordination suivante présentant une plage de fonctionnement élargie par rapport à l'étape de coordination précédente et l'étape de coordination suivante étant utilisée lorsque la demande n'a pas pu être satisfaite dans le cadre de la plage de fonctionnement de l'étape de coordination associée, les agrégats utilisés comprenant au moins un moteur à combustion interne (2) et au moins un moteur électrique (3) et le dispositif et les étapes de coordination étant définis de telle sorte que :

   - lors d'une première étape de coordination, le moteur à combustion interne (2) est entraîné, dans une plage de fonctionnement, à un couple de base idéal (EtBId) et le moteur électrique (3) est entraîné, dans une plage de fonctionnement, à un premier couple théorique de moteur électrique (tDEI1) dont le gradient de couple est limité ;
   - lors d'une deuxième étape de coordination, le moteur à combustion interne (2) est entraîné, dans une plage de fonctionnement sans fermeture en fondu de l'injection, à un premier couple théorique de moteur à combustion interne (tDE1) et le moteur électrique (3) est entraîné, dans la plage de fonctionnement, au premier couple théorique de moteur électrique (tDEI1) dont le gradient de couple est limité ;
   - lors d'une troisième étape de coordination, le moteur à combustion interne (2) est entraîné, dans la plage de fonctionnement sans fermeture en fondu de l'injection, au premier couple théorique de moteur à combustion interne (tDE1) et le moteur électrique (3) est entraîné, dans une plage de fonctionnement, à un deuxième couple théorique de moteur électrique (tDEI2) dont le gradient de couple est limité ; et
   - lors d'une quatrième étape de coordination, le moteur à combustion interne est entraîné, dans une plage de fonctionnement, à un deuxième couple théorique de moteur à combustion interne (tDE2) permettant une fermeture en fondu d'au moins un cylindre du moteur à combustion interne (2) et le moteur électrique (3) est entraîné, dans la plage de fonctionnement, au deuxième couple théorique de moteur électrique (tDEI2) dont le gradient de couple est limité.

**10.** Appareil de commande d'entraînement hybride dans lequel est mis en place un dispositif selon la revendication 9.

Fig. 1

Fig. 2

Fig. 3

EtBld, tDEld

tDE1

tDE2, tDE

tD

tDEl1

tDEl2, tDEl

M/Nm

100.0

0.0

1.06

1.18

t/s

EP 2 033 865 B1